# EUROPEAN PATENT APPLICATION

(11) **EP 2 647 604 A1**
(43) Date of publication of application: **09.10.2013**
(21) Application number: 11845084.0
(22) Date of filing: 27.10.2011
(51) Int. Cl.: C03B 18/02

(54) **APPARATUS FOR PRODUCING FLOAT PLATE GLASS AND METHOD FOR PRODUCING FLOAT PLATE GLASS**

(30) Priority: 29.11.2010 JP 2010265620
(71) Applicant: Asahi Glass Company, Limited, Tokyo 100-8405 (JP)
(72) Inventor: TATSUKOSHI Kentaro, Tokyo 100-8405 (JP)
(74) Representative: Müller-Boré & Partner Patentanwälte
(86) International application number: PCT/JP2011/074877
(87) International publication number: WO 2012/073624

(57) **Abstract**

The present invention relates to an apparatus for producing a float sheet glass, including: a glass melting tank; a float bath which produces a glass ribbon by allowing a molten glass that is continuously supplied from the glass melting tank to flow on a surface of a molten metal layer; an annealing furnace which anneals the glass ribbon produced in the float bath; a cutting stage which cuts the glass ribbon annealed in the annealing furnace into predetermined dimensions, thereby producing a float sheet glass; and a transport path which transports the glass ribbon produced in the float bath toward the cutting stage through the annealing furnace, in which the apparatus further includes a first building which surrounds at least the float bath and the annealing furnace, the cutting stage is installed outside the first building, and a forward space area is formed between a side wall in which a glass ribbon carrying-out opening of the first building is provided and a side wall in which a glass ribbon carrying-out opening of the annealing furnace is provided.

## Description

### TECHNICAL FIELD

The present invention relates to an apparatus for producing a float sheet glass and a method for producing a float sheet glass, in which there is no sheet cracking, occurrence of warping is prevented, causes of generation of surface defects of a float sheet glass can be reduced, and more stable production is possible.

### BACKGROUND ART

At present, as a production method of a glass sheet for construction, a glass sheet for an automobile, or a glass sheet for a display panel, a float sheet glass production method is widely used.

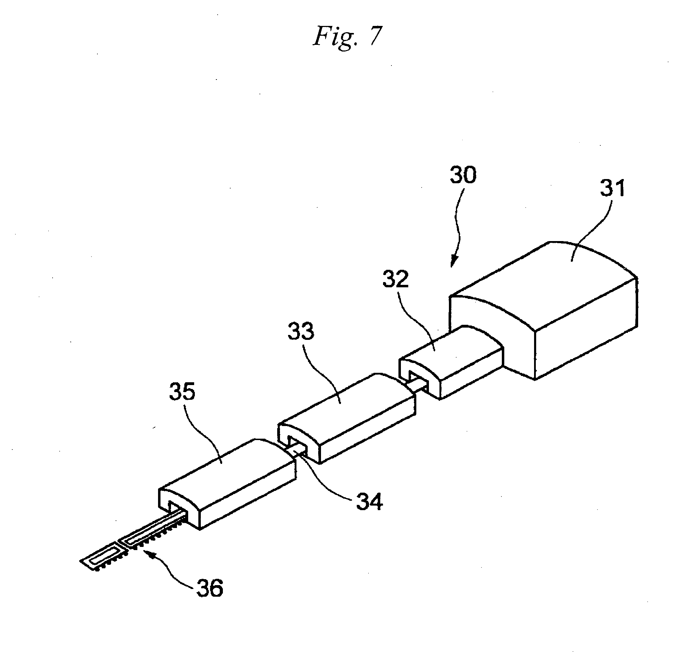

Describing with reference to Fig. 7 showing an outline of this type of float sheet glass production apparatus, a charged glass raw material is melted in a melting area 31 of a glass melting tank 30 and the obtained molten glass flows out onto the surface of a molten tin layer stored in a float bath 33 through a clarifier tank 32. The molten glass which has flowed out to the float bath 33 is shaped into a glass ribbon 34 having a predetermined thickness while moving on the surface of the molten tin layer toward the downstream side with a lower temperature from the upstream side with a higher temperature of the float bath, carried out from an outlet of the float bath 33, transported to an annealing furnace 35, and annealed while being transported in the annealing furnace 35, and the annealed glass ribbon 34 is drawn out from the annealing furnace 35 and then cut into predetermined dimensions in a glass ribbon cutting stage 36 (a cutting device is not shown), thereby being turned into float sheet glasses.

In particular, as for a glass substrate for a flat display panel (FPD: Flat Panel Display) such as a liquid crystal display panel, a plasma display panel, or an organic EL display panel, in general, a high-precision and high-quality thin glass sheet having a sheet thickness in a range of about 0.3 mm to 3.0 mm, having excellent flatness, and having no defects is required. In a float sheet glass production line for producing a thin glass sheet having such a sheet thickness, in order to strictly control the operating conditions of the production line and also prevent substances that becomes surface defects of a glass sheet, such as dust, motes, foreign matter, or substances that causes pollution, from sticking to the surface of a glass ribbon, a design is often made such that the glass melting tank, the float bath, and the annealing furnace are installed in a single building and a shaped glass ribbon continuously flows through such a building.

In particular, in production of a high-quality and high-precision glass sheet with a thin sheet thickness for the FPD as described above, a long-line annealing furnace which anneals a glass ribbon is often divided into a closed first annealing zone which is provided with a heater and strictly temperature-controlled such that an annealing temperature is gradually lowered, and a second annealing zone which further cools a glass ribbon cooled to a temperature less than or equal to a predetermined temperature, to a temperature in which the glass ribbon can be cut, and is not provided with a heater. In general, the glass ribbon carried out from the annealing furnace and having a low temperature is cut into desired dimensions at a glass ribbon cutting stage usually exposed to external air, and the cut glass sheet is picked up and packed in a box at a sheet pickup stage. On the other hand, for production of a glass sheet having higher quality, a proposal has also been made in which a second building having a surrounding structure is installed to be provided successively to an outlet of the annealing furnace in the above-described building and the cutting stage and, in some cases, even the sheet pickup stage are included in the second building, thereby preventing sticking of dust, motes, foreign matter, or substances that causes pollution to the surface of a glass ribbon or the surface of a cut glass sheet in the cutting stage or a subsequent stage.

In the float sheet glass production line as described above, for example, in the glass melting tank, a temperature in a range of about 1600°C to 1200°C is provided along a direction from the upstream side thereof to the downstream side, and in the float bath, a temperature in a range of about 1000°C to 700°C is provided along a direction from the upstream side thereof to the downstream side, and in the annealing furnace, a temperature in a range of about 700°C to 30°C is provided along a direction from the upstream side thereof to the downstream side. Therefore, in the inside of the building in which the glass melting tank, the float bath, and the annealing furnace are installed, an ascending air current which is generated from a high-temperature glass melter or the like is discharged from an exhaust port installed in a ceiling or an upper wall of the building, whereby a level (height of 0 to 2 m) near a floor on which particularly the annealing furnace is installed reaches a negative pressure state, compared to an atmosphere of an area of the cutting stage. The same applies to a case where the second building having a surrounding structure in which the cutting stage is included is provided successively to an outlet of the annealing furnace in the above-described building, as described above. For this reason, a result in which colder air on the cutting stage side flows from a glass ribbon outlet of the annealing furnace into the annealing furnace due to negative pressure on the side where the annealing furnace is installed is caused, whereby a problem occurs in that a change in glass ribbon production conditions and particularly a variation in strictly controlled annealing conditions is caused, and thus it is difficult to maintain stable production conditions. For example, if annealing conditions change, a risk that sheet cracking of a glass ribbon is generated in the annealing furnace or a problem in that warping or undesirable distortion is generated in the produced glass sheet occurs.

In the float sheet glass production apparatus as described above, a technique of performing an improvement in seal structure at a glass ribbon carrying-out end area of the float bath of the float sheet glass production apparatus such that non-uniform cooling or surface defects are not generated in the glass ribbon is disclosed in JP-A-2008-505837. In the publication, specifically, there is proposed an invention relating to a device to significantly reduce contact between combustion gas and the surface of a glass ribbon at an outlet of a float bath. However, the invention described in the publication relates to an improvement to deflect the flow of the combustion gas flowing out from the outlet of the float bath, from the surface of the glass ribbon, and a problem that is generated in the annealing furnace is not mentioned at all.

### BACKGROUND ART DOCUMENT

### PATENT DOCUMENT

Patent Document 1: JP-A-2008-505837

### SUMMARY OF THE INVENTION

### PROBLEMS THAT THE INVENTION IS TO SOLVE

The present invention has an object of providing an apparatus for producing a float sheet glass and a method for producing a float sheet glass, in which in float sheet glass production, due to a difference in pressure between the inside of a building in which at least a float bath and an annealing furnace are installed and an atmosphere of an area of a cutting stage that is a downstream process thereof, the air or cool air (hereinafter, also referred to as air or atmospheric gas on the cutting stage side) flows from a side of an area of the cutting stage through a glass ribbon outlet area of the annealing furnace into the annealing furnace, and thus a glass ribbon which is transported in the annealing furnace and further a glass ribbon which flows on the surface of molten tin of the float bath are cooled, thereby preventing a change in predetermined temperature conditions set in advance.

### MEANS FOR SOLVING THE PROBLEMS

In order to achieve the above-mentioned object, the present invention provides an apparatus for producing a float sheet glass, comprising:
a glass melting tank;
a float bath which produces a glass ribbon by allowing a molten glass that is continuously supplied from the glass melting tank to flow on a surface of a molten metal layer;
an annealing furnace which anneals the glass ribbon produced in the float bath; a cutting stage which cuts the glass ribbon annealed in the annealing furnace into predetermined dimensions, thereby producing a float sheet glass; and
a transport path which transports the glass ribbon produced in the float bath toward the cutting stage through the annealing furnace,
wherein the apparatus further comprises a first building which surrounds at least the float bath and the annealing furnace,
the cutting stage is installed outside the first building, and
a forward space area is formed between a side wall in which a glass ribbon carrying-out opening of the first building is provided and a side wall in which a glass ribbon carrying-out opening of the annealing furnace is provided.

### ADVANTAGE OF THE INVENTION

According to the invention, in a float sheet glass production line, it is possible to stably maintain temperature in the annealing furnace at predetermined conditions set in advance and it is possible to prevent temperature fluctuation of a glass ribbon due to air which flows from the glass ribbon cutting stage side into the annealing furnace, and as a result, a high-quality glass sheet with a consistent quality, in which there are no defects such as warping and undesirable distortion, particularly, a glass sheet for a display panel having a thin sheet thickness can be stably produced.

### BRIEF DESCRIPTION OF THE DRAWINGS

Fig. 1 is a longitudinal cross-sectional explanatory diagram of an apparatus for producing a float sheet glass relating to an embodiment of the invention.
Fig. 2 is a longitudinal cross-sectional explanatory diagram of an apparatus for producing a float sheet glass relating to another embodiment of the invention.
Fig. 3 is a longitudinal plan explanatory diagram of an apparatus for producing a float sheet glass relating to an embodiment of the invention.
Fig. 4 is a longitudinal plan explanatory diagram of an apparatus for producing a float sheet glass relating to another embodiment of the invention.
Fig. 5 is a longitudinal plan explanatory diagram of an apparatus for producing a float sheet glass relating to another embodiment of the invention.
Fig. 6 is a longitudinal cross-sectional explanatory diagram of an apparatus for producing a float sheet glass relating to a comparative example of the invention.
Fig. 7 is a schematic perspective explanatory diagram of an apparatus for producing a float sheet glass in the relating art.

### MODE FOR CARRYING OUT THE INVENTION

Hereinafter, the best embodiment of the invention will be described referring to the drawings. However, descriptions of configuration requirements which are described below are representative examples of embodiments of the invention and the invention is not limited to the contents of these.

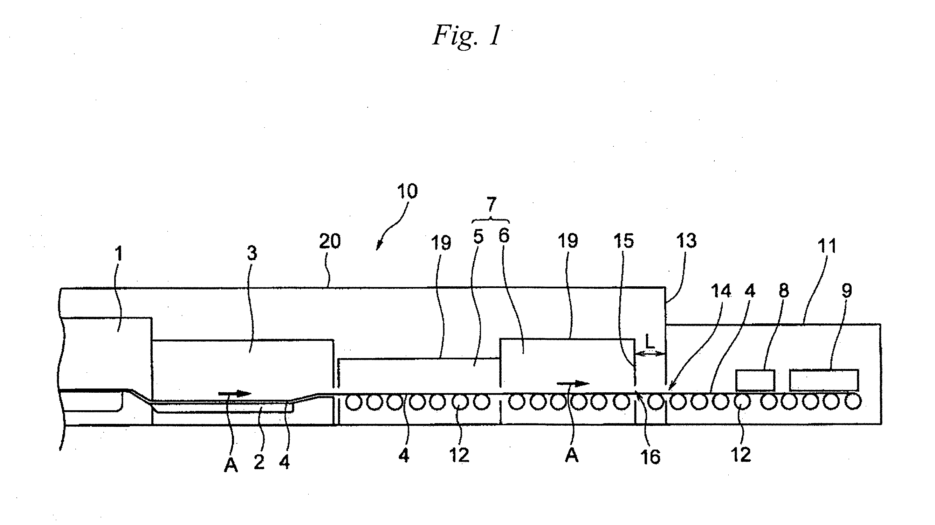

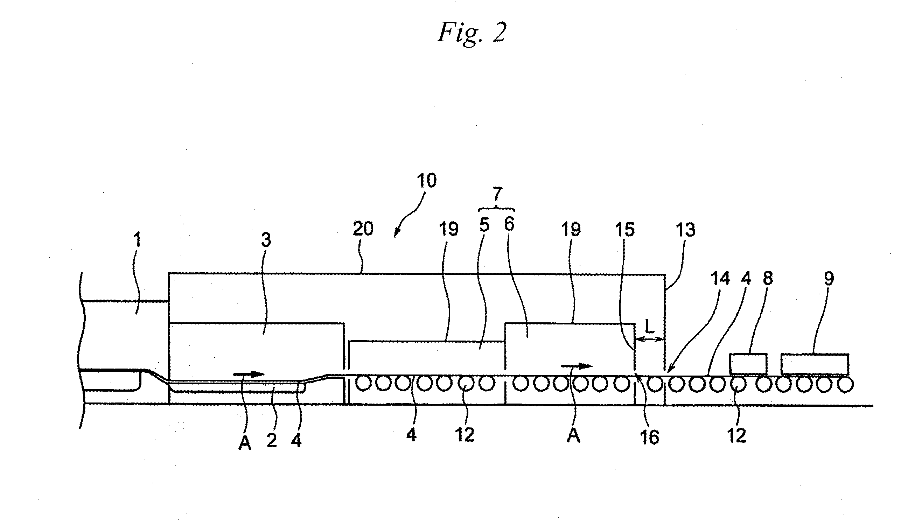

Figs. 1 and 2 are longitudinal cross-sectional explanatory diagrams showing the schematic configurations of apparatuses for producing a float sheet glass relating to preferred embodiments of the invention, and as shown in the drawings, each of the apparatuses for producing a float sheet glass includes a glass melting tank 1 which melts a glass raw material and clarifies the molten glass, a float bath 3 which allows the molten glass to flow out onto a molten metal layer 2 such as molten metal tin and shapes the molten glass into a flat glass ribbon having constant width and thickness by advancing the molten glass while floating it, an annealing furnace 7 having a first annealing chamber 5 and a second annealing chamber 6 which anneal a glass ribbon 4 carried out from the float bath 3 and reduce occurrence of a distortion in the inside of the glass ribbon 4 as much as possible, a cutting stage 8 which cuts the glass ribbon carried out from the annealing furnace 7 into predetermined dimensions, and a sheet pickup stage 9 which classifies the cut glass sheet or performs box packing or the like. In addition, since the glass ribbon 4 is shown by a solid line, the glass ribbon 4 is expressed so as to flow in the right direction in the drawing in a spaced state on the molten metal layer 2 in the float bath in Figs. 1 and 2. However, in fact, the glass ribbon flows in contact with the surface of a molten metal.

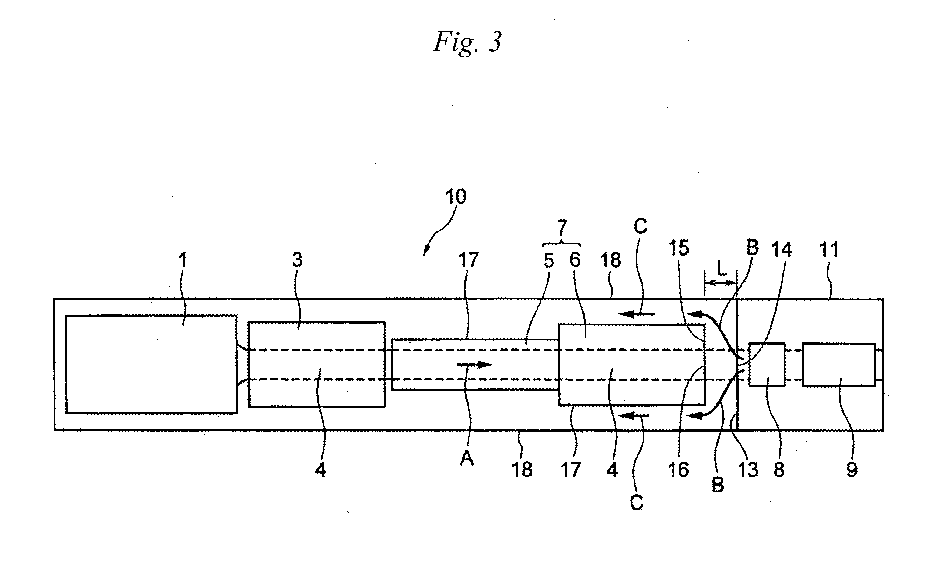

In an example shown in Figs. 1 and 3, the glass melting tank 1, the float bath 3, and the annealing furnace 7 are installed in a single building (hereinafter referred to as a first building 10) having a surrounding structure with respect to external air, and the cutting stage 8 and the sheet pickup stage 9 are also installed in a single building (hereinafter referred to as a second building 11) having a surrounding structure.

In an example shown in Fig. 2, the float bath 3 and the annealing furnace 7 are installed in a single building (hereinafter referred to as the first building 10) having a surrounding structure with respect to external air, and the cutting stage 8 and the sheet pickup stage 9 are not installed in the second building as described above and are present in an open state of being exposed to external air without being surrounded.

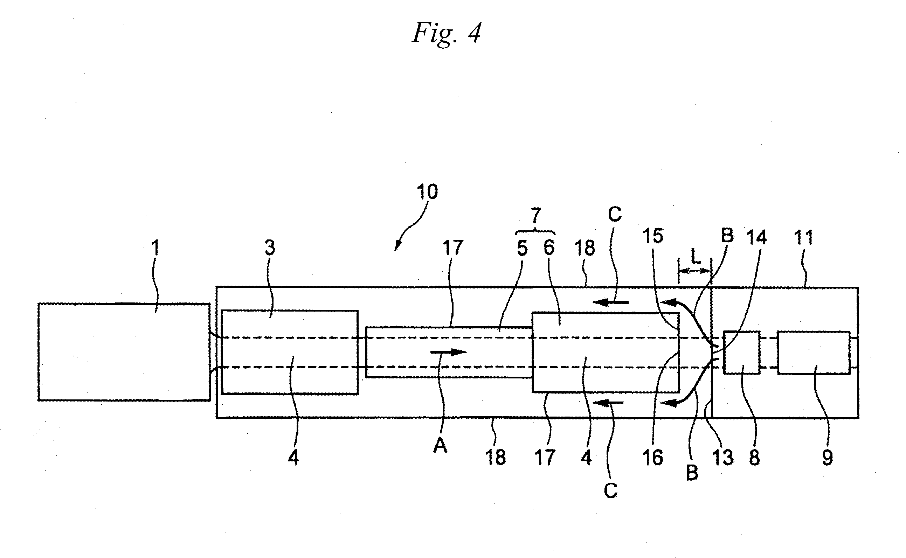

In an example shown in Fig. 4, the float bath 3 and the annealing furnace 7 are installed in the first building 10 and the cutting stage 8 and the sheet pickup stage 9 are also installed in the second building 11.

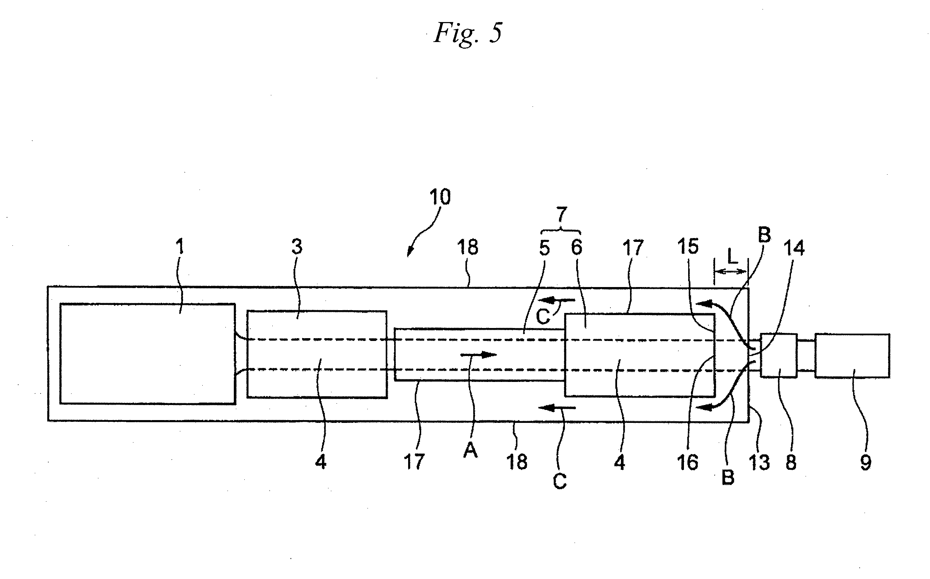

In an example shown in Fig. 5, the glass melting tank 1, the float bath 3, and the annealing furnace 7 are installed in the first building 10 and the cutting stage 8 and the sheet pickup stage 9 are not installed in the second building as described above and are present in an open state of being exposed to external air without being surrounded.

The first building 10 in the invention has a structure in which at least the float bath 3 and the annealing furnace 7 among float sheet glass production facilities are accommodated, and has a structure basically having side walls, an upper wall, a lower wall, a lower shielding member, a front wall, and a back wall that provide the surroundings having a surrounding structure, except for a structure required for production of a float sheet glass and portions required for repair, maintenance, service, operation, and work. Then, an internal space of the first building 10 is basically partitioned and separated from a space of the inside of a construction in which the first building is installed, except for the required portions described above, and the internal space of the first building is designed so as to reduce the influence of external air on the internal space of the construction.

Also in a case where the glass melting tank is installed in the first building, similarly, the first building has a structure basically having side walls, an upper wall, a lower wall, a lower shielding member, a front wall, and a back wall that provide the surroundings having a surround structure, except for a structure required for glass melting and portions required for repair, maintenance, service, operation, and work.

Further, an exhaust hole is provided in a ceiling or an upper wall of the building in order to exhaust air and atmospheric gas in the building.

It is preferable that the annealing furnace 7 in the invention be partitioned into the first annealing chamber 5 which is provided with a heater that is controlled so as to anneal the glass ribbon 4 carried out from the float bath 3 and the second annealing chamber 6 which is installed successively to the first annealing chamber 5 and further cools the glass ribbon 4 cooled in the first annealing chamber. The first annealing chamber 5 is temperature-controlled so as to gradually cool the glass ribbon 4 carried out from the float bath 3 and having high temperature (for example, in a range of about 750°C to 850°C) to a temperature less than or equal to a strain point temperature of the glass at a predetermined annealing rate such that undesirable distortion is not generated in a glass sheet that is produced. In the first annealing chamber 5, a heater (not shown) is installed such that a predetermined temperature distribution and temperature gradient are obtained. The glass ribbon 4 cooled to a temperature (for example, in a range of about 300°C to 500°C) sufficiently lower than the strain point temperature in the first annealing chamber 5 is carried from the first annealing chamber 5 into the second annealing chamber 6 and further cooled, thereby being cooled to the degree of temperature (for example, in a range of 30°C to 100°C) that is appropriate for cutting of the glass ribbon. The second annealing chamber 6 is not usually provided with particularly a heater. However, for further annealing, in the second annealing chamber, a temperature distribution and a temperature gradient are controlled such that the temperature in the chamber gradually decreases in a traveling direction of the glass ribbon.

Further, in the inside of the annealing furnace 7, a plurality of transport rolls 12 which transport the glass ribbon 4 carried out from the float bath 3 are provided in parallel at predetermined intervals, whereby a transport path is formed. Then, the transport rolls 12 are successively provided from a glass ribbon outlet of the float bath 3 through the inside of the annealing furnace 7 to the sheet pickup stage such that the glass ribbon 4 is carried out from the annealing furnace 7 and transported to the cutting stage 8 and the glass sheet cut in the cutting stage 8 is transported to the sheet pickup stage 9 that is a subsequent stage thereof. The transport rolls are driven by a driving motor (not shown) such that a continuous glass ribbon having a ribbon shape is transported on the transport rolls to the cutting stage at a constant speed set in advance.

In addition, in the annealing furnace 7 in the inventions shown in Figs. 1 and 2, an example in which the annealing furnace 7 is partitioned into two, the first annealing chamber 5 and the second annealing chamber 6, is shown. However, a configuration may also be made such that a single chamber structure in which first and second annealing chambers are continuous is adopted and a glass ribbon carried out from a float bath is annealed from a high-temperature state and then annealed to a temperature close to room temperature.

The annealing furnace 7 in the invention described above has a structure which is partitioned in the inside of the first building except for an inlet and an outlet for the glass ribbon 4 and portions required for repair, maintenance, service, operation, and work and basically has side walls, an upper wall, a lower wall, a lower shielding member, a front wall, and a back wall that provide the surroundings having a surrounding structure. That is, each of the first annealing chamber 5 and the second annealing chamber 6 of the annealing furnace 7 has a room structure such that the whole including both sides, an upper side, and a lower side of the glass ribbon transport rolls installed in the annealing chamber is substantially shut off from external air from an upstream to a downstream with respect to the transport rolls. Then, it is preferable that a lateral space area be formed between each of side walls 18 on both sides of the first building 10 in a direction parallel with the traveling direction of the glass ribbon 4 of the annealing furnace 7 and each of side walls 17 of the annealing furnace, and an upper space area be also formed between a ceiling wall 20 of the first building and a ceiling wall 19 of the annealing furnace. That is, the annealing furnace 7 is provided at a central area in a longitudinal direction (that is, the traveling direction of the glass ribbon) of the first building 10 on a floor of the first building 10. The annealing furnace 7 is installed to be spaced at a predetermined interval from each of the side walls on both sides of the first building 10.

Due to such a structure, in the first building 10, an internal space of the annealing furnace 7 is basically partitioned and separated from a space of the inside of the first building 10 except for the required portions described above, and the internal space of the annealing furnace 7 is designed so as to reduce the influence of atmospheric gas in the first building 10. Further, only the second annealing furnace 6 may also share a ceiling with the ceiling wall 20 of the building or have an attic room provided to between the second annealing furnace 6 and the ceiling wall 20 of the building.

In the examples shown in Figs. 1, 3, and 4, the second building 11 is installed so as to surround the cutting stage 8 which cuts the glass ribbon 4 carried out from the annealing furnace 7 (the second annealing chamber 6) and shut off external air. The second building 11 also has a structure in which the cutting stage 8 is accommodated, and has a structure basically having side walls, an upper wall, a lower wall, a lower shielding member, a front wall, and a back wall that provide the surroundings having a surrounding structure, except for a structure required for the cutting stage 8 and portions required for repair, maintenance, service, operation, and work. Then, an internal space of the second building 11 is basically partitioned and separated from a space of the inside of the construction in which the second building is installed, except for the required portions described above, and the internal space of the building is designed so as to reduce the influence of external gas on the internal space of the construction.

In the second building 11, the sheet pickup stage that is a post-process of the above-described cutting stage may also be included and a processing stage subsequent to the sheet pickup stage may also be further included.

In a case where the second building 11 is provided, since the cutting stage and the sheet pickup stage or the like are partitioned from external air and shut off from external air, dust, pollutants, or the like in external air can be prevented from flowing into the cutting stage and the sheet pickup stage or the like, and as a result, dust, pollutants, or the like can be prevented from falling and sticking to the surface of the glass ribbon flowing through the annealing furnace 7, and thus causes of generation of surface defects of a glass sheet can be reduced.

In addition, in the invention, as shown in Figs. 2 and 5, a construction may also be made such that the second building 11 is not installed and the cutting stage 8 and the sheet pickup stage 9 or the like that is a subsequent stage thereof are present in an open state of being exposed to external air without being surrounded.

At an end portion on the side where the glass ribbon 4 that is transported in a direction of arrow A is carried out from the first building, of the first building 10 in the invention, a forward outlet side wall 13 is provided in an erect manner in a direction facing perpendicular to a flow direction of the glass ribbon 10, and a carrying-out opening 14 through which the glass ribbon 4 is carried out is formed in the forward outlet side wall 13 of the first building. Further, a forward outlet side wall 15 is provided in an erect manner at an end portion on the side where the glass ribbon 4 that is transported in the direction of arrow A is carried out from the annealing chamber 6, of the annealing furnace 7, that is, the second annealing chamber 6, and a carrying-out opening 16 through which the glass ribbon 4 is carried out is formed in the forward outlet side wall 15 of the annealing furnace.

Each of the carrying-out openings 14 and 16 of the forward outlet side wall 13 and the forward outlet side wall 15 is made to be an opening having a size that is appropriate for the glass ribbon 4 to be carried out from the first building 10 and the annealing furnace 7. However, it is designed in a size having such a width and a height that extra air does not flow from the carrying-out opening 14 into the first building 11 and from the carrying-out opening 16 into the annealing furnace 7.

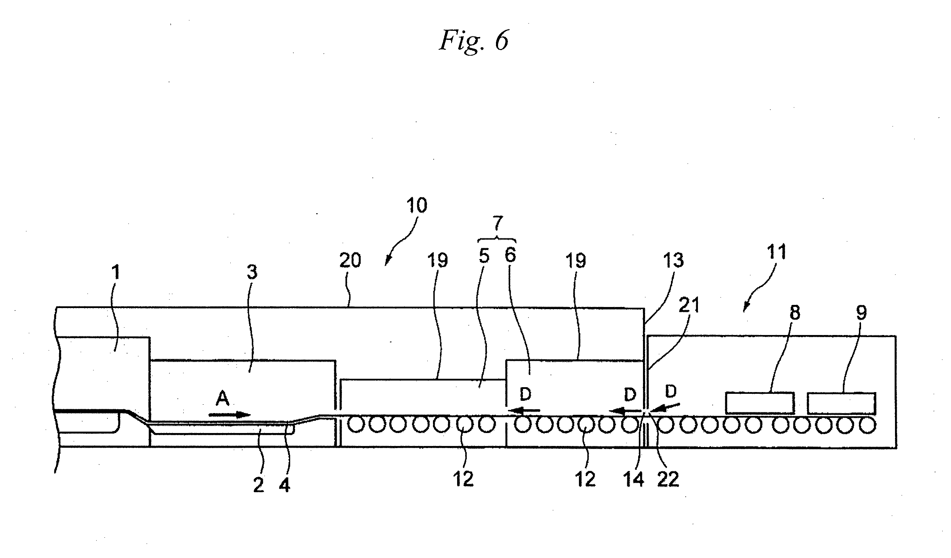

On the other hand, in a case where the second building is installed as in Figs. 1, 3, and 4, a rearward inlet side wall is provided in an erect manner at an end portion on the side where the glass ribbon 4 that is transported in the direction of arrow A is carried into the second building 11, of the second building 11, and a carrying-in opening through which the glass ribbon 4 is carried in is formed in the inlet side wall of the second building. In Fig. 6, the rearward inlet side wall of the second building is denoted by 21 and the carrying-in opening that is provided in the inlet side wall 21 is denoted by 22.

In a case where the first building 10 and the second building 11 are successively provided, a structure may also be made in which the outlet side wall 13 of the first building 10 is shared with the inlet side wall of the second building 11, alternatively, a structure may also be made in which the outlet side wall 13 of the first building 10 and the inlet side wall of the second building 11 are separately formed and the forward outlet side wall 13 and the inlet side wall of the second building 11 are successively provided. Further, a structure may also be made in which the first building 10 and the second building 11 are installed in proximity to each other and which has some clearance in which inflow of external air from clearance between the outlet side wall 13 of the first building and the inlet side wall of the first building 11 becomes less than or equal to a predetermined amount.

As described above, the forward outlet side wall of the first building 10 has various aspects. However, since in all the aspects, the forward outlet side wall serves as a partition wall which partitions the cutting stage side of the first building 10, hereinafter, in the invention including also a case where it is shared with the inlet side wall of the second building 11, the forward outlet side wall of the first building 10 is also referred to as a partition wall.

In the invention, the forward outlet side wall 13 of the first building 10, that is, a partition wall that becomes a partition with the cutting stage side is installed to be spaced at a predetermined interval from the outlet side wall 15 on the carrying-out side for the glass ribbon 4 of the annealing furnace 7, and thus a forward space area is formed between the forward outlet side wall 13 and the partition wall. Such a forward space area becomes a space which makes external air or atmospheric gas that has flowed from the cutting stage side or the second building 11 through the carrying-out opening 14 of the first building 10 into the first building 10 enter the lateral space area between each of the longitudinal side walls of the annealing furnace 7 and each of the longitudinal side walls of the first building in the opposite direction to the traveling direction of the glass ribbon, and thus it is possible to reduce entry of external air (air or cool air) on the cutting stage side described above or atmospheric gas (air or cool air) in the second building from the carrying-out opening 16 of the second annealing chamber of the annealing furnace 7 into the inside of the annealing furnace 7.

In Figs. 1 to 5, L denotes the distance between the outer surface of the forward outlet side wall 15 of the annealing furnace 7, that is, the first annealing chamber 6 and the inner surface on the second annealing furnace 6 side of the partition wall that is the forward outlet side wall 13 of the first building 10, and although the distance also depends on the sizes of the first building 10, the annealing furnace 6, and further, the float bath 3, according to a normal apparatus for producing a float sheet glass, the distance is preferably 0.5 m or more. This distance shows an average distance in the direction of arrow A between the outer surface of the outlet side wall 15 of the second annealing chamber 6 and the inner surface of the partition wall that is the outlet side wall 13 of the first building 11. If this distance is 0.5 m or more, a sufficient forward space area is formed between the outlet side wall 13 of the first building 11 and the above-described partition wall, and thus it is possible to reduce an amount thereof, in which external air from the cutting stage side or atmospheric gas in the second building from the second building 11 side, which has flowed in from the carrying-out opening 14 of the forward outlet side wall 13, that is, the partition wall of the first building 10, flows from the glass ribbon carrying-out opening 16 of the annealing furnace 7, that is, the second annealing chamber 6 into the second annealing chamber 6.

With respect to an upper limit of this distance, there is no particular limitation. However, it is preferable that the distance is 30.0 m or less in terms of a design of the apparatus and practical use.

Further, it is preferable that the transverse cross-sectional area of the forward space area between the outlet side wall 13 of the second building 10 and the outlet side wall 15 of the second annealing chamber 6 be greater than or equal to at least two times the transverse cross-sectional area of the carrying-out opening 14 of the outlet side wall 13, that is, the partition wall of the second building 10. By making the transverse cross-sectional area be greater than or equal to two times in this manner and making the distance L between the outer surface of the outlet side wall 15 of the annealing chamber 6 and the inner surface on the annealing furnace 6 side of the partition wall that is the outlet side wall 13 of the first building 10 0.5 m or more, as described above, it is possible to make air that has flowed from the carrying-out opening 14 of the forward outlet side wall 13 of the first building 10 into the inside side thereof enter the lateral space area between each of the longitudinal side walls of the annealing furnace 7 and each of the longitudinal side walls of the first building in the opposite direction to the traveling direction of the glass ribbon, and thus it is possible to reduce the amount of inflow from the glass ribbon carrying-out opening 14 of the second annealing chamber 6 into the second annealing chamber 6 and the first annealing chamber 5.

A space between the longitudinal side wall 17 of the annealing furnace 7 and the longitudinal side wall 18 of the first building 10 needs sufficient width and length such that air which has flowed in from the carrying-out opening 14 of the forward outlet side wall 13 of the first building 10 flows in the opposite direction (a direction of arrow C) to the traveling direction of the glass ribbon. Usually, if the distance between the outer surface of the longitudinal side wall 17 of the annealing furnace 7 and the inner surface of the longitudinal side wall 18 of the first building 10 is 2.0 m or more over the entire length of the annealing furnace 7, it is sufficient. In addition, the distance as referred to herein indicates the distance of the shortest portion between the outer surface of the longitudinal side wall 17 of the annealing furnace 7 and the inner surface of the longitudinal side wall 18 of the first building 10.

The partition wall of the above-described example has a single stage configuration. However, it may also be configured in two stages or multiple stages greater than or equal to two stages at predetermined intervals, as necessary. For example, another partition wall or a plurality of partition walls may also be provided between the outlet side wall 13 of the second building 10 and the outlet side wall 15 of the second annealing chamber 6. Such a partition wall may also be made so as to partially cover a predetermined area of an upper area and/or both side areas of a space between the outlet side wall 13 of the second building 10 and the outlet side wall 15 of the second annealing chamber 6.

In the invention, as shown in Figs. 3 to 5, if the outlet side wall 15 of the annealing furnace 7, that is, the second annealing chamber 6 and the outlet side wall 13, that is, the partition wall of the first building 10 are installed at a predetermined interval, whereby the forward space area is formed, most of external air (air or cool air) which has flowed from the cutting stage side through clearance of the glass ribbon carrying-out opening 14 of the outlet side wall 13 into the inside of the first building 10 or most of atmospheric gas (air or cool air) which has flowed in from the second building side enters as shown by arrow B in the forward space area, and then flows through the lateral space area between each of the side walls 18 of the first building 10 and each of the side walls 17 of the annealing furnace 7 and an upper space area between the ceiling wall 20 of the first building 10 and the ceiling wall 19 of the annealing furnace 7 in the opposite direction (the direction of arrow C) to the traveling direction of the glass ribbon, that is, to the upstream side of the flow of the glass ribbon, whereby external air or atmospheric gas flowing from the clearance between the carrying-out opening 16 of the second annealing chamber 6 and the glass ribbon 4 into the inside of the second annealing chamber 6 can be reduced. Therefore, since inflow of external air or atmospheric gas which causes temperature fluctuation, into the insides of the second annealing chamber 6 and further the first annealing chamber 5, is small, temperature fluctuation due to disturbance in the annealing furnace 7 can be suppressed, and thus it is possible to perform annealing under predetermined set annealing conditions and it is possible to reduce occurrence of cracking, warping, and undesirable non-uniform distortion of the glass ribbon, thereby being able to reduce generation of defects in a product.

On the other hand, as in Fig. 6, if the outlet side wall 13 of the first building 10 and the inlet side wall 21 of the second building are successively provided and both the walls are not installed at a predetermined interval, air having low temperature (for example, cool air in a range of about 4°C to 10°C) in the second building 11 directly enters from the glass ribbon carrying-in opening 22 of the inlet side wall 21 of the second building through the carrying-out opening 14 of the outlet side wall 13 of the first building 10 and the carrying-out opening 16 of the second annealing chamber 6 into the first building 10 and then the second annealing chamber 6, as shown by arrow D, and further enters the first annealing chamber 5. As a result, the cool air that has flowed in changes the previously set annealing conditions of the second annealing chamber 6 and the first annealing chamber 5, whereby desired annealing is not performed, and generation of cracking, warping, and undesirable non-uniform distortion of the glass ribbon occurs, and thus a high-quality float sheet glass with consistent quality cannot be produced. Further, dust, pollutants, or the like which is generated in the cutting stage and the sheet pickup stage or the like in the second building 11 or flows in as an accompaniment in these stages flows into the annealing furnace 7, and thus defects are generated in which dust, pollutants, or the like falls and sticks to the surface of the glass ribbon flowing through the annealing furnace 7, thereby causing generation of surface defects of a float sheet glass.

A method for producing a float sheet glass by the apparatus for producing a float sheet glass according to the invention described above will be described below.

In the case of the invention in which the second building 11 is installed, it is preferable to control pressure in the first building 10 (more specifically, the forward space area, the lateral space areas, or/and the upper space area) to negative pressure, compared to pressure in the second building 11. Specifically, it is preferable to set the pressure in the first building 10 to be about 0.1 Pa to 30.0 Pa lower than the pressure in the second building 11. By setting the pressure in this manner, air which has flowed from the second building 11 through a clearance portion between the glass ribbon transport opening 14 of the first building and the glass ribbon 4 into the first building 10 enters so as to flow in a direction (the direction of arrow B) of the lateral space area between each of the longitudinal side walls 16 of the first building 10 and each of the longitudinal side walls 17 of the annealing furnace 7 in the forward space area in the first building 10 and can be controlled such that the entered air flows in the opposite direction (the C direction) to the traveling direction of the glass ribbon 4 through the lateral space areas. Then, in a state controlled in this manner, a glass ribbon shaped and carried out from the float bath is annealed through the inside of the annealing furnace and then carried out from the first building 10, and the glass ribbon is cut at the cutting stage in the second building 11, whereby a desired float sheet glass is produced.

In the case of the invention in which the second building 11 is not installed and the cutting stage is in an open state under an atmosphere of outside atmospheric pressure, it is preferable to control pressure in the first building 10 (more specifically, the forward space area, the lateral space areas, or/and the upper space area) to negative pressure with respect to the outside atmospheric pressure. Specifically, it is preferable to set the pressure in the first building 10 to be about 0.1 Pa to 30.0 Pa lower than the pressure of an atmosphere of external air, similarly to the above. By setting the pressure in this manner, air that is external air which has flowed into the building 10 through a clearance portion between the glass ribbon transport opening 14 portion of the first building and the glass ribbon 4 enters so as to flow in the direction of arrow B in the forward space area, similarly to the example described above, and can be controlled such that the entered air flows in the direction of arrow C through the lateral space areas. Then, in a state controlled in this manner, a glass ribbon shaped and carried out from the float bath is annealed through the inside of the annealing furnace and then carried out from the first building 10, and the glass ribbon is cut at the cutting stage, whereby a desired float sheet glass is produced.

The invention has been described in detail and with reference to specific embodiments. However, it will be apparent to those skilled in the art that various changes or modifications can be added without departing from the spirit and scope of the invention.
This application is based on Japanese Patent Application No. 2010-265620 filed on November 29, 2010, the contents of which are incorporated herein by reference.

### INDUSTRIAL APPLICABILITY

According to the invention, it is possible to produce consistently a homogeneous, high-precision, and high-quality float sheet glass having a thin sheet thickness, in which surface defects are few and warping or a stress distribution is low, and thus it is suitable for production of a glass substrate for a FPD, in particular, a glass substrate having a sheet thickness in a range of 0.3 mm to 1.0 mm for a liquid crystal display panel.

### DESCRIPTION OF REFERENCE NUMERALS AND SIGNS

1: glass melting tank
2: molten metal layer
3: float bath
4: glass ribbon
5: first annealing chamber
6: second annealing chamber
7: annealing furnace
8: cutting stage
9: sheet pickup stage
10: first building
11: second building
12: transport roll
13: outlet side wall of first building (side wall in which glass ribbon carrying-out opening of first building is provided)
14: carrying-out opening of outlet side wall of first building
15: outlet side wall of annealing furnace (side wall in which glass ribbon carrying-out opening of annealing furnace is provided)
16: carrying-out opening of outlet side wall of annealing furnace
17: side wall of annealing furnace
18: side wall of first building
19: ceiling wall of annealing furnace
20: ceiling wall of first building
21: inlet wall of second building
22: carrying-in opening of second building

## Claims

1. An apparatus for producing a float sheet glass, comprising:
a glass melting tank;
a float bath which produces a glass ribbon by allowing a molten glass that is continuously supplied from the glass melting tank to flow on a surface of a molten metal layer;
an annealing furnace which anneals the glass ribbon produced in the float bath;
a cutting stage which cuts the glass ribbon annealed in the annealing furnace into predetermined dimensions, thereby producing a float sheet glass; and
a transport path which transports the glass ribbon produced in the float bath toward the cutting stage through the annealing furnace,
wherein the apparatus further comprises a first building which surrounds at least the float bath and the annealing furnace,
the cutting stage is installed outside the first building, and
a forward space area is formed between a side wall in which a glass ribbon carrying-out opening of the first building is provided and a side wall in which a glass ribbon carrying-out opening of the annealing furnace is provided.

2. The apparatus for producing a float sheet glass according to claim 1, wherein a distance between the side wall in which the glass ribbon carrying-out opening of the first building is provided and the side wall in which the glass ribbon carrying-out opening of the annealing furnace is provided is 0.5 m or more.

3. The apparatus for producing a float sheet glass according to claims 1 or 2, wherein a lateral space area is formed between each of longitudinal side walls of the first building and each of longitudinal side walls of the float bath and the annealing furnace, and
air which has flowed from the glass ribbon carrying-out opening of the first building into the first building reaches the lateral space areas through the forward space area and flows in the opposite direction to a traveling direction of the glass ribbon.

4. The apparatus for producing a float sheet glass according to any one of claims 1 to 3, further comprising: a second building which is provided outside the first building and surrounds the cutting stage.

5. The apparatus for producing a float sheet glass according to any one of claims 1 to 4, wherein the annealing furnace is partitioned into a first annealing chamber which includes a heater that is controlled so as to gradually cool the glass ribbon carried out from the float bath to a temperature less than or equal to a glass strain point, and a second annealing chamber which further cools the glass ribbon cooled in the first annealing chamber.

6. The apparatus for producing a float sheet glass according to any one of claims 1 to 5, wherein the glass melting tank is installed in the first building.

7. The apparatus for producing a float sheet glass according to any one of claims 1 to 6, wherein a pressure in the first building is set to be lower than a pressure of an atmosphere on a cutting stage side.

8. The apparatus for producing a float sheet glass according to any one of claims 1 to 7, wherein the pressure in the first building is set to be 0.1 Pa to 30.0 Pa lower than the pressure of an atmosphere on the cutting stage side.

9. The apparatus for producing a float sheet glass according to claim 4, wherein a pressure in the first building is set to be 0.1 Pa to 30.0 Pa lower than a pressure in the second building.

10. A method for producing a float sheet glass, including producing a float sheet glass by the apparatus for producing a float sheet glass according to claim 1,
wherein air which has flowed from the cutting stage side through the glass ribbon carrying-out opening of the first building into the first building is allowed to pass through the forward space area and further flow in the opposite direction to a traveling direction of the glass ribbon through a lateral space area between each of longitudinal side walls of the first building and each of longitudinal side walls of the float bath and the annealing furnace in the first building.

11. The method for producing a float sheet glass according to claim 10, wherein a pressure in the first building is set to be lower than a pressure of an atmosphere on the cutting stage side.

12. The method for producing a float sheet glass according to claim 11, wherein the pressure in the first building is set to be 0.1 Pa to 30.0 Pa lower than the pressure of the atmosphere on the cutting stage side.
